# EUROPÄISCHE PATENTSCHRIFT

(11) **EP 1 271 734 B1**
(45) Veröffentlichungstag und Bekanntmachung des Hinweises auf die Patenterteilung: **23.09.2009**
(21) Anmeldenummer: 02014304.6
(22) Anmeldetag: 27.06.2002
(51) Int. Cl.: H02G 3/12

(54) **Elektrische Installationseinrichtung**
Electrical installation device
Equipement d'installation électrique

(30) Priorität: 29.06.2001 DE 10131295
(43) Veröffentlichungstag der Anmeldung: 02.01.2003
(73) Patentinhaber: ABB AG, 68309 Mannheim (DE)
(72) Erfinder: Witte, Adriaan Marinus, 3436 HT Nieuwegein (NL)

(56) Entgegenhaltungen:
- EP-A- 0 677 906
- DE-U- 29 722 471
- FR-A- 2 575 873

## Beschreibung

Die Erfindung betrifft eine Elektrische Installationseinrichtung, die in eine Öffnung in einer Wand einsetzbar ist, die ein im Querschnitt C-förmiges Außengehäuse aufweist, das einen langgestreckten rechteckigen Boden, an den Längskanten des Bodens senkrecht dazu angeordnete Stege und wiederum senkrecht dazu abgewinkelte Schenkel umfasst, die aufeinander zuweisen und deren Endkanten in Abstand zueinander verlaufen, wobei an den Endkanten U-förmige Aufnahmerillen angeordnet sind, die längs der Endkanten verlaufen, und wobei in das Außengehäuse wenigstens ein Installationsgehäuse mit wenigstens einem Einhängerand eingesetzt ist, gemäß dem Oberbegriff des Anspruchs 1.

Bekannte Installationseinrichtungen sind als sogenannte Hohlwanddosen ausgebildet, die einen im Wesentlichen runden Querschnitt aufweisen und demgemäß auch in eine daran angepasste runde Öffnung in der Wand einsetzbar sind.

Die DE 297 22 471 U1 zeigt eine Einbaudose zum Einbau in die Öffnung eines Installationskanals, wobei die Einbaudose mit seitlichen Haken in Halterinnen des Installationskanals eingehängt werden kann. Die Einbaudose mit ihren Haken ist dabei an die Geometrie des Installationskanals angepasst, unterschiedlich geformte Installationskanäle benötigen anders geformte Einbaudosen.

Aufgabe der Erfindung ist es, eine Installationseinrichtung der eingangs genannten Art zu schaffen, bei der mehrere Installationsgehäuse in eine längliche ovale Öffnung auf einfache Weise einsetzbar und darin montierbar sind, und wobei das Installationsgehäuse ohne Änderung in verschiedene Außengehäuse eingesetzt werden kann.

Die Aufgabe wird erfindungsgemäß gelöst durch eine gattungsgemäße Installationseinrichtung mit den kennzeichnenden Merkmalen des Anspruchs 1.

Danach ist der wenigstens eine Einhängerand an das Installationsgehäuse an entgegengesetzt liegenden Seitenwänden als biegbare Fahne (25, 26, 79,80) angeformt, die in die Aufnahmerillen zur Halterung des Installationsgehäuses im Außengehäuse einfügbar ist.

Die vorteilhafte Wirkung der erfindungsgemäßen Ausgestaltung liegt darin, dass aufgrund des als biegbare Fahne angeformten Einhängerandes das Installationsgehäuse in verschiedene Außengehäuse, die sich in der Ausrichtung der Anordnung der Aufnahmerillen unterscheiden können, eingesetzt werden kann, ohne umgebaut werden zu müssen.

Dabei gibt es einige Möglichkeiten der Anordnung der Aufnahmerillen:
Bei einer ersten Ausführungsform weisen die offenen Seiten der Aufnahmerillen aufeinander zu; die Fahnen verlaufen etwa parallel zum Boden des Installationsgehäuses und stehen nach außen ab und können somit von der Stirnseite des Außengehäuses in die Aufnahmerillen eingeschoben werden. Dabei verlaufen die Rillenwände parallel zum Boden des Außengehäuses.

Bei einer weiteren Ausführungsform können die Rillenwände mit den beiden Aufnahmerillen bzw. die dadurch gebildeten U-Formen einen stumpfen Winkel miteinander bilden, der vorzugsweise zum Boden des Außengehäuses hin offen ist.

Bei einer anderen Ausgestaltung der Erfindung besteht die Möglichkeit, daß die Rillen senkrecht oder etwa senkrecht zum Boden in Richtung vom Boden weg hin offen sind. Bei den letzteren Möglichkeiten der Anordnung der Aufnahmerillen können die Installationsgehäuse senkrecht zur Längserstreckung des Außengehäuses in dieses eingesetzt werden; bei schräg angeordneten Aufnahmerillen und bei den 90 ° zum Boden des Außengehäuses verlaufenden Rillen können die Fahnen ohne weiteres von den offenen Seiten der Aufnahmerillen, quer zur Längserstreckung derselben, eingefädelt werden. Dabei werden die Fahnen, die über ein Filmscharnier an den Leiterwänden gelenkig angeschlossen sind, einfach passend abgebogen.

Gemäß einer weiteren Ausführungsform der Erfindung sind an den Seiten des Installationsgehäuses, an denen die Fahnen angeformt sind, Rastarme vorgesehen, an denen Rastflächen angeordnet sind, die hinter bzw, unter die freien Kanten der Schenkel der C-Form des Außengehäuses greifen und auf diese Weise das Installationsgehäuse fixieren Dabei schließen die Rastarme am Boden des Installationsgehäuses an und sind unter einem spitzen Winkel nach außen ausgeklinkt.

Zur Verbesserung der Fixierung des Installationsgehäuses im Außengehäuse kann auf der Innenfläche des Bodens des Außengehäuses eine C-förmige Trägerschiene befestigt sein, auf der das Installationsgehäuse aufsteht, oder durch die das Installationsgehäuse zentriet wird.

Anhand der Zeichnung, in der einige Ausführungsbeispiele der Erfindung dargestellt sind, sollen die Erfindung sowie weitere vorteilhafte Ausgestaltungen und Verbesserungen der Erfindung näher erläutert und beschrieben werden.

Es zeigen
- Fig. 1: eine perspektivische Ansicht einer Installationseinrichtung mit eingebauten Installationsgehäusen,
- Fig. 2: eine perspektivische Ansicht eines Installationsgehäuses,
- Fig. 3 bis Fig. 5: Stirnansichten der Installationseinrichtung mit unterschiedlicher Anordnung der Aufnahmerillen für die Fahnen am Installationsgehäuse.

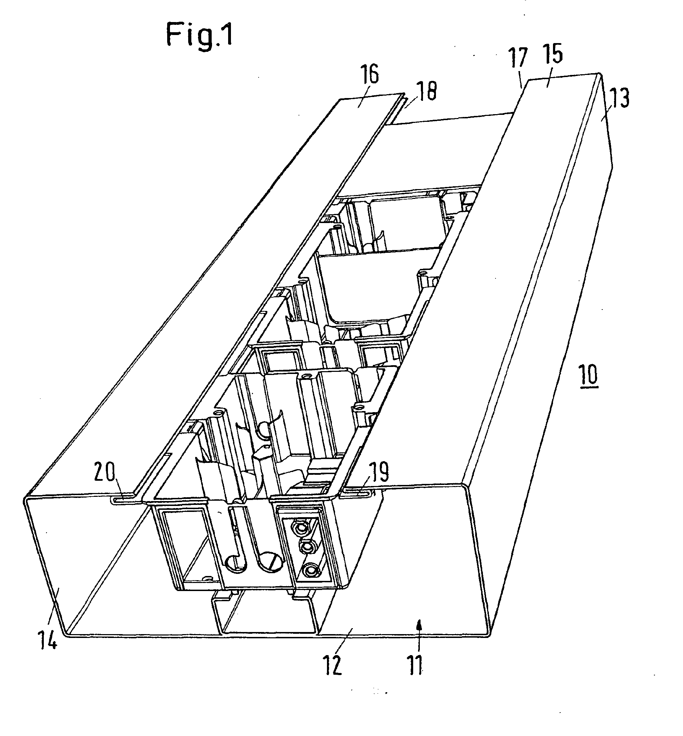

Die Fig. 1 zeigt in perspektivischer Darstellung eine erfindungsgemäße Installationseinrichtung 10. Diese besitzt ein Außengehäuse 11 mit einem langgestreckt rechteckigen Boden 12, an den Längskanten senkrecht dazu verlaufenden Stegen 13 und 14 sowie an den Stegen 13 und 14 anschließenden Schenkeln 15 und 16, die sich gegenüberliegen und aufeinander zu gerichtet sind. An den freien Endkanten 17 und 18 der Schenkel 15 und 16 befinden sich Aufnahmerillen 19 und 20. Diese Aufnahmerillen 19 und 20 sind mit ihrer offenen Seite gegeneinander gerichtet.

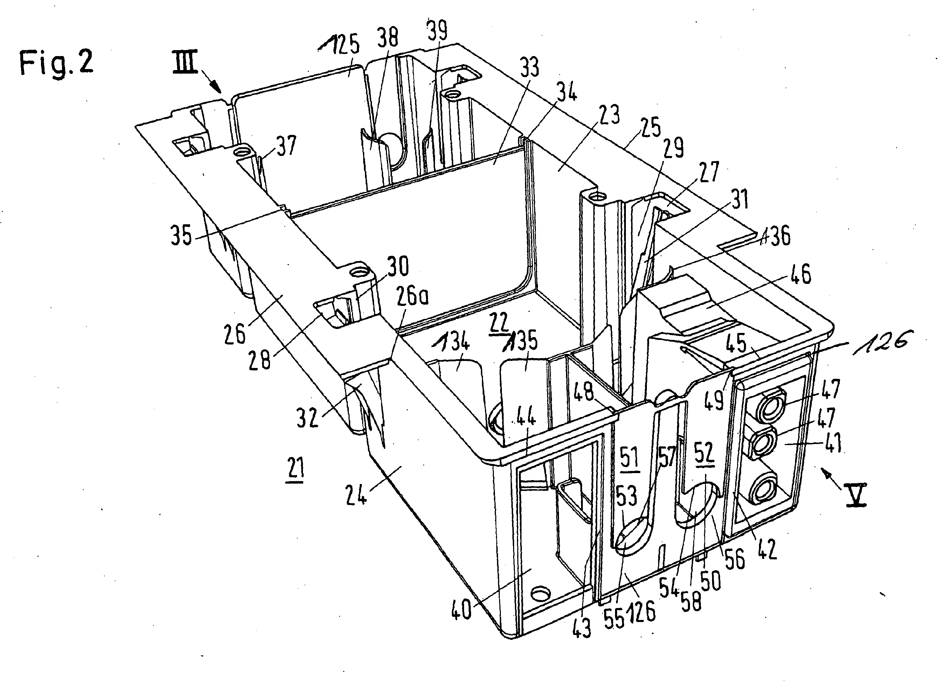

Die Fig. 2 zeigt ein in das Außengehäuse 11 einfügbares Installationsgehäuse 21, welches eine rechteckige Form mit einem Boden 22, senkrecht dazu verlaufenden Seitenwänden 23 und 24 sowie Endwandabschnitten 125 und 126 aufweist.

Weitere vorteilhafte Ausgestaltungen und Verbesserungen sind den weiteren Unteransprüchen zu entnehmen.

An den freien Endkanten der Seitenwände 23 und 24 ist über ein Filmscharnier 26a eine senkrecht dazu angeordnete Fahne 25 bzw. 26 angeformt, wobei die Fahnen 25 und 26 ebenso wie die Seitenwände 23 und 24 eine Aussparung 27, 28 bzw. 29, 30 aufweisen; in den Aussparungen 29 und 30 der Seitenwände 23 und 24 befinden sich federnd nach außen ausgeklinkte Rastarme 31 und 32, die, wie weiter unten näher dargestellt ist, zur Fixierung des Installationsgehäuses 21 dienen. Der Innenraum des Installationsgehäuses 21 ist mittels einer Trennwand 33, die in Rillen 34 und 35 eingesteckt werden kann, zu unterteilen. Darüber hinaus besitzt das Installationsgehäuse 21 senkrecht vom Boden 22 vorstehende Wände 134, 135 und 136 die den Raum zwischen den Wänden 134 bis 136 und der Trennwand 33 zu einer Installationsverteilerdose machen. Ähnliches gilt auch für den Raum hinter der Trennwand 33; auch dort sind senkrecht angeordnete Trennwände 37, 38 und 39 vorgesehen, die eine entsprechende Unterteilung dieses Raumes zwischen der Trennwand 33 und der Abschlußwand 125 erzeugen.

Die Abschlußwand 126 besitzt anschließend an die beiden Seitenwände 23 und 24 Durchbrüche 40 und 41, die mittels senkrecht stehender Pfosten 42 und 43 seitlich begrenzt sind; von den Seitenwänden 24 zu dem Pfosten 43 und von der Seitenwand 23 zum Pfosten 42 ist eine Brücke 44 bzw. 45 vorgesehen, deren obere Flächen mit der oberen Fläche der Fahnen 26 und 25 fluchten. An die Innenfläche der Seitenwand 23 und den Pfosten 42 sowie die Brücke 45 schließt sich ein Gehäuseabschnitt 46 an, an dem bis zum Durchbruch 41 ragende Kabeltüllen 47 angeordnet sind. An den aufeinander zuweisenden vertikalen Kanten der Pfosten 43 und 42 sind Rillen 48 und 49 vorgesehen, in die ein Abschlußteil 50 eingefügt werden kann, wobei dieses Abschlußteil 50 zwei Abdeckflächen 51 und 52 aufweist, die nach unten hin, also zum Boden 22 hin eine konkave Abrundung 53 bzw. 54 aufweisen, die zusammen mit den unteren Enden von Aussparungen 55 und 56 je einen kreisförmigen Durchbruch 57 und 58 bilden, durch die Kabel hindurch eingefügt werden können. Eine ähnliche Ausgestaltung befindet sich auch im Bereich der Abschlußwand 125 (siehe weiter unten).

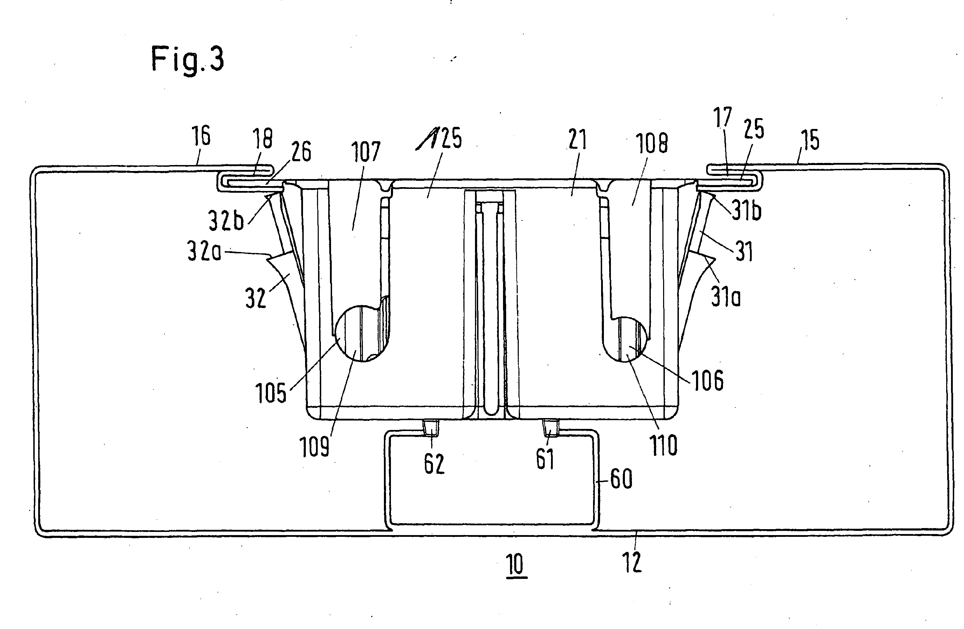

Die Fig. 3 zeigt eine Aufsicht auf die Stirnseite der Installationseinrichtung 10 mit eingebautem Installationsgehäuse 21. Auf dem Boden 22 des Außengehäuses 11 ist ein Träger 60 befestigt, der ebenfalls eine C-Form aufweist und der an der Bodenaußenseite des Installationsgehäuses 21 angeformte Zapfen 61 und 62 umfaßt, so daß hierdurch eine Führung und eine Fixierung gebildet ist.

Die freien Kanten der Schenkel 15 und 16 besitzen die Aufnahmerillen 17 und 18, in die die Fahnen 25 und 26 eingeschoben sind. Dabei werden die Rillen 17 und 18 durch doppellagiges Umfalzen des freien Endes des Schenkels 15 bzw. 16 gebildet. Aus der Fig. 3 ist auch ersichtlich die Ausgestaltung der Rastarme 31 und 32, deren Enden auf die Unterseite der Aufnahmerillen 17 und 18, die dem Boden zugewandt sind, anliegen und so das Installationsgehäuse festhalten.

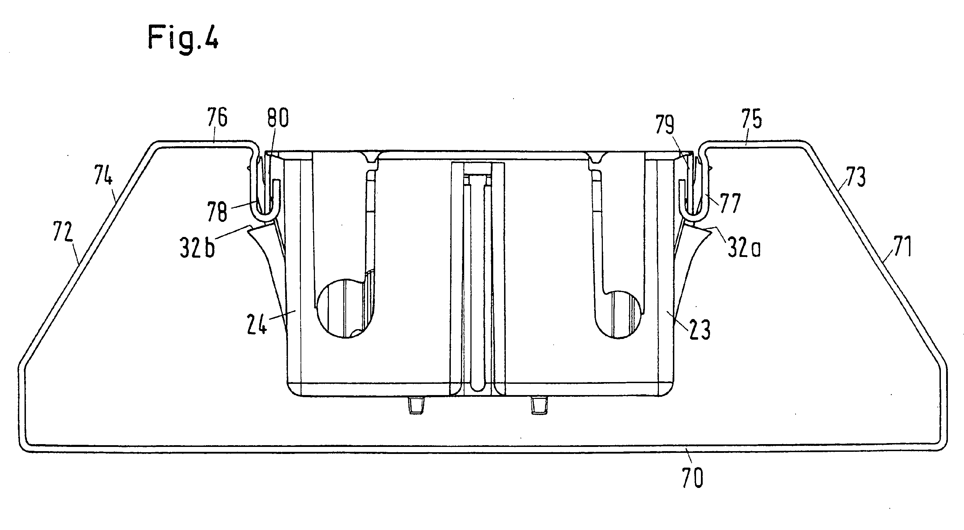

Bei der Ausführungsform gemäß Fig. 4 ist das Außengehäuse 70 ebenfalls etwa C-förmig, wobei die an den Boden 70 anschließenden Stege 71 und 72 abgeknickt sind, so daß sie je einen Abschnitt 73 und 74 aufweisen, die miteinander einen spitzen Winkel bilden, der zum Boden 70 hin geöffnet ist. An den Enden der Schenkel 75 und 76 sind Aufnahmerillen 77 und 78 angeordnet, deren U-Form senkrecht zum Boden 70 verläuft und deren offene Seiten von diesem weg gerichtet sind. In diese Aufnahmerillen werden die Fahnen 79, 80 eingesteckt, die hier parallel zu den Seitenwänden 23 und 24 verlaufend umgebogen sind.

Man erkennt aus der Fig. 3, daß die Rastarme 31 und 32 zwei Rastflächen 31a, 31b bzw. 32a und 32b aufweisen; bei der Ausführung nach Fig. 3, bei der die Aufnahmerillen 17, 18 mit ihren offenen Seiten sich gegenüber stehen, wird die Rastnase 31b bzw. 32b am freien Ende des Rastarmes 31 bzw. 32 benutzt; bei der Ausführung gem. der Fig. 4, bei der die Aufnahmerillen durch die nach außen hin offene U-Form gebildet sind, wird die Rastfläche 32a bzw. 32b benutzt.

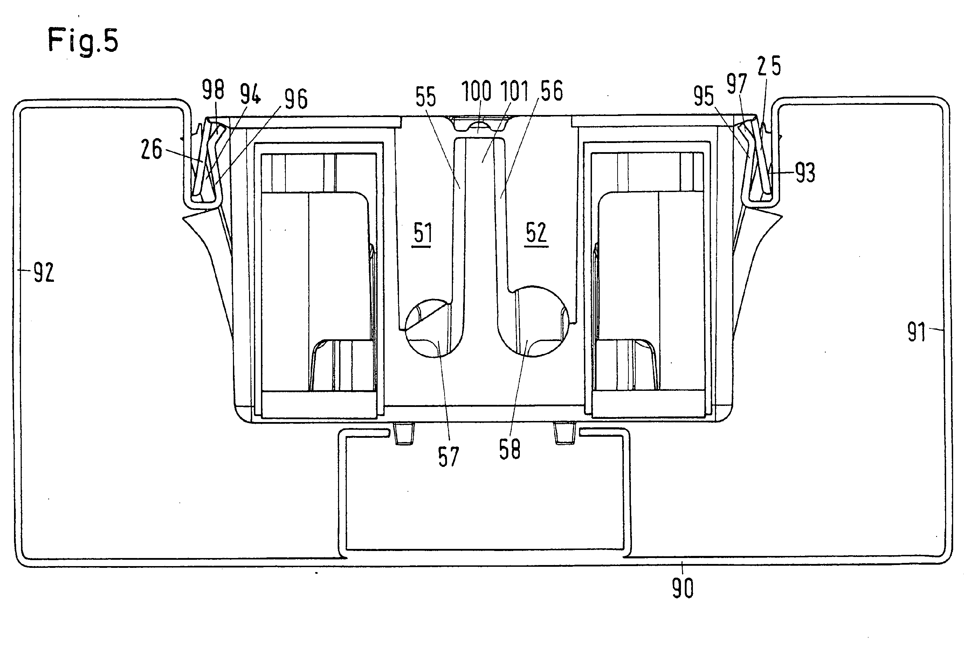

Bei der Ausführung nach Fig. 5 unterschiedlich ist, was das Außengehäuse 90 betrifft, daß die Seitenwandungen 91 und 92 knickfrei sind; die U-förmigen Aufnahmerillen 93 und 94 sind in gleicher Weise ausgerichtet wie die 77 und 78; lediglich der jeweils innen liegende Schenkel 95, 96 besitzt eine Abknickung 97 und 98, so daß sich dort die Aufnahmeöffnung der Aufnahmerillen 93, 94 erweitert und eine verbesserte Einführung der Fahnen 25, 26 ermöglicht ist.

Während bei der Ausführung gemäß der Fig. 3 das Installationsgehäuse von der Stirnseite eingeschoben wird, kann das Installationsgehäuse nach den Ausführungen gemäß Fig. 4 und Fig. 5 von oben senkrecht zum Boden 70 bzw. 90 eingeführt werden.

Aus der Fig. 5 ist außerdem noch zu erkennen, daß das einsetzbare Teil die beiden Abdeckflächen 51 und 52 aufweist, die mittels eines Steges 100 miteinander verbunden sind; sie decken die beiden Aussparungen 55 und 56 ab unter Freilassung des Durchlasses 57 bzw. 58; zwischen den beiden Aussparungen 57 und 58 befindet sich ein Wandabschnitt 101, der für eine gewisse Abdeckung zur Frontseite hin dient.

Bei der Ausführung gemäß Fig. 3, die eine Aufsicht auf das Gehäuse gemäß Pfeilrichtung III zeigt, sind in der Wandung 125 Aussparungen 105 und 106 vorgesehen, die sich in der Nähe der Seitenwände 24 bzw. 23 befinden, also dort, wo sich bei der Abschlußwand 26 die rechteckigen Durchbrüche 40, 41 befinden. Auch diese Aussparungen 105 und 106 sind mittels zweier miteinander verbundener Abdeckwände 107 und 108 unter Freilassung eines kreisförmigen Durchlasses 109 und 110 abgedeckt.

**Anlage 1: Bezugszeichenliste**

| | |
|---|---|
| 10 | Installationseinrichtung |
| 11 | Außengehäuse |
| 12 | Rechteckiger Boden |
| 13, 14 | Steg |
| 15, 16 | Schenkel |
| 17, 18 | Freie Endkante |
| 19,20 | Aufnahmerille |
| 21 | Installationsgehäuse |
| 22 | Boden des Installationsgehäuses |
| 23, 24 | Seitenwand, Stirnwand |
| 125,126 | Endabschnitte |
| 26a | Filmscharnier |
| 25, 26 | Fahne |
| 27, 28, 29, 30 | Aussparung in Fahne |
| 31, 32 | Rastarm |
| 31 a, 31 b, 32a, 32b | Rastfläche, Rastnase |
| 33 | Trennwand im Inneren |
| 34, 35 | Rille |
| 134, 135, 136 | Wand, Trennwand |
| 37, 38, 39 | Trennwand |
| 40, 41 | Durchbruch, Aussparung |
| 42, 43 | Pfosten |
| 44,45 | Brücke |
| 46 | Gehäuseabschhitt |
| 47 | Kabeltülle |
| 48, 49 | Rillen an den Pfosten 43, 42 |
| 50 | Abschlussteil |
| 51,52 | Abdeckfläche, Abdeckfahne |
| 53, 54 | Konkave Abrundung |
| 55,56 | Aussparung |
| 57, 58 | Kreisförmiger Durchbruch |
| 60 | Träger - |
| 61, 62 | Zapfen an Träger |
| 70 | Außengehäuße |
| 71,72 | Steg |
| 73,74 | Abschnitt |
| 75, 76 | Ende des Schenkels |
| 77, 78 | Aufnahmerille |
| 79,80 | Fahne |
| 90 | Außengehäuse |
| 91, 92 | Seitenwandung |
| 93, 94 | Aufnahmerille |
| 95, 96 | Innen liegender Schenkel |
| 97, 98 | Abknickung |
| 100 | Steg |
| 101 | Wandabschnitt |
| 105, 106 | Aussparung |
| 107, 108 | Abdeckwand |
| 109, 110 | Kreisförmiger Durchlass |
| | |

## Patentansprüche

1. Elektrische Installationseinrichtung, die in eine Öffnung in einer Wand einsetzbar ist, die ein im Querschnitt G-förmiges Außengehäuse (11, 70, 90) aufweist, das einen langgestreckten rechteckigen Boden (12), an den Längskanten des Bodens (12) senkrecht dazu angeordnete Stege (13, 14) und wiederum senkrecht dazu abgewinkelte Schenkel (15, 18) umfasst, die aufeinander zuweisen und deren Endkanten in Abstand zueinander verlaufen, wobei an den Endkanten U-förmige Aufnahmerillen angeordnet sind, die längs der Endkanten verlaufen, und wobei in das Außengehäuse wenigstens ein Installationsgehäuse (21) mit wenigstens einem Einhängerand eingesetzt ist,
**dadurch gekennzeichnet,**
**dass** der wenigstens eine Einhängerand an das Installationsgehäuse an entgegengesetzt liegenden Seitenwänden (23, 24) als biegbare Fahne (25, 26, 79,80) angeformt ist, die in die Aufnahmerillen (19, 20, 77, 78) zur Halterung des Installationsgehäuses (21) im Außengehäuses (11, 70, 90) einfügbar ist.

2. Installationseinrichtung (10) nach Anspruch 1, **dadurch gekennzeichnet, daß** die offenen Seiten der U-förmigen Aufnahmerillen (19,20) aufeinander zuweisen und die Fahnen (25,26) etwa parallel zur Bodenfläche (12) des installationsgehäuses (21) nach außen abstehen.

3. Installationseinrichtung (10) nach Anspruch 1, **dadurch gekennzeichnet, daß** die Rillenwände parallel zu den abgewinkelten schenke (15,16) verlaufen.

4. Installationseinrichtung (16) nach Anspruch 1, **dadurch gekennzeichnet, daß** die Rillenwände miteinander einen stumpfen Winkel bilden, der vorzugsweise zur Bodenebene offen ist.

5. Installationseinrichtung (16) nach Anspruch 1, **dadurch gekennzeichnet, daß** die Aufnach (77,78;93,94) senkrecht oder etwa senkrecht zum Boden des Außengehäuses (70,90) angeordnet sind, wobei die offenen Seiten vom Boden weg weisen..

6. Installationseinrichtung (16) nach Anspruch 5, **dadurch gekennzeichnet, daß** die Fahnen (25,26) so angeordnet sind, daß sie mit der Außenfläche der Seitenwände des Installationsgehäuses eine zum Boden hin offene U-förmige Rille bilden.

7. Installationseinrichtung (10) nach einem der vorigen Ansprüche, **dadurch gekennzeichnet, daß** am Boden (12) des Außengehäuses ein in Längsrichtung verlaufender, vorzugsweise C-förmiger Träger (60) angebracht ist, auf dem das Installationsgehäuse aufsteht und/oder von dem es zentriert ist.

8. Installationseinrichtun (10) nach einem der vorigen Ansprüche, daß an den Seiten, an denen die Fahnen (25,26,72,80) angeformt sind, Rastarme (31,32) orgesehen sind, an denen (31a,31b,32a,32b) Rastftächen angeordnet sind, die hinter bzw. unter die freien Kanten der aufeinander zuweisenden, abgeknickten Schenkel greifen und das Installationsgehäuse fixieren.

9. Installationseinrichtung (10) nach Anspruch 8, **dadurch gekennzeichnet, daß** die Rastarme am (31a,31b,32a,32b) Boden des Installationsgehäuses anschließen und unter einem spitzen Winkel nach außen ausgeklinkt sind.

10. Installationseinrichtung, nach einem der rongen Ansprüche bei der die Installationsgehäuse rechteckig sind, **dadurch gekennzeichnet, daß** die Fahnen an (25,26,79,80) den freien Endkanten der Seitenwände angeformt sind.

11. Installationseinrichtung nach einem der vorigen Ansprüche, **dadurch gekennzeichnet, daß** die Fahnen (25,26,79,89) unter wischenfügung eines Filmscharniergelenkes (26a) am Instattationsgehäuse (21) angeformt sind.

12. Installationseinrichtung (10) nach einem der vorigen Ansprüche, **dadurch gekennzeichnet, daß** zwei Fahnen (29,26,79,80) auf jeder Seite vorgesehen und dazwischen die Rastarme (31,32) angeordnet sind.

13. Installationseinrichtung (10) nach einem der vorigen Ansprüche, **dadurch gekennzeichnet, daß** die Aufnahmerillen (19,20,77,78) durch Abkantung an den Schenkeln gebildet sind.

14. Installationseinrichtung (10) nach einem der vorigen Ansprüche, **dadurch gekennzeichnet, daß** am Boden des Installationsgehäuses Trennwandabschnitte (37,38,39,134,135,136) vorgesehen sind, die miteinander und gegebenenfalls mit einer Trennwand (33) einen einer Installationdose entsprechenden Innenraum bilden.

15. Installationseinrichtung (10) nach Anspruch 14, **dadurch gekennzeichnet, daß** an den Stirnwänden, (23,24) ausgehend von deren freien Kanten, im Abstand zueinander angeordnete Aussparungen (40,41) vorgesehen sind, die mittels Abdeckfahnen (51,52) abbgedeckt sind, deren Enden konkav ausgebildet sind und mit den bodenseitigen Enden je einen etwa kreisförmigen Durchbruch (109,110, 58,57) zum einführen von Kabeln bilden.

16. Installationseinrichtung (10) nach Anspruch 15, **dadurch gekennzeichnet, daß** die Abdeckfahnen (51,52) mittels einer Brücke (44,45) verbunden sind und über die Aussparungen (40 41) ,fügbar sind.

## Claims

1. An electrical installation device which is insertable into an opening in a wall and comprises an outer housing (11, 70, 90) of C-shaped cross section which comprises an elongated rectangular floor (12), with plates (13, 14) arranged perpendicularly thereto on the longitudinal edges of the floor (12) and legs (15, 16) bent perpendicularly to the plates and facing towards each other and whose end edges extend at a distance from each other, with U-shaped holding grooves being arranged on the end edges which extend along the same, and with at least one installation housing (21) with at least one hook-in edge being inserted into the outside housing, **characterized in that** the at least one hook-in edge is formed on the installation housing on oppositely disposed side walls (23, 24) as a flexible lug (25, 26, 79, 80) which can be inserted into the holding grooves (19, 20, 77, 78) for holding the installation housing (21) in the outside housing (11, 70, 90).

2. An installation device (10) according to claim 1, **characterized in that** the open sides of the U-shaped holding grooves (19, 20) face each other and the lugs (25, 26) protrude outwardly approximately parallel to the floor surface of the installation housing (21).

3. An installation device (10) according to claim 1, **characterized in that** the groove walls extend parallel to the bent legs (15, 16).

4. An installation device (10) according to claim 1, **characterized in that** the groove walls form an obtuse angle with each other which is preferably open towards the plane of the floor.

5. An installation device (10) according to claim 1, **characterized in that** the holding grooves (77, 78; 92, 94) are arranged perpendicularly or approximately perpendicular to the floor of the outside housing (70, 90), with the open sides facing away from the floor.

6. An installation device (10) according to claim 5, **characterized in that** the lugs (25, 26) are arranged in such a way that they form a U-shaped groove which is open towards the floor with the outside surface of the side walls of the installation housing.

7. An installation device (10) according to one of the preceding claims, **characterized in that** a preferably C-shaped support (60) which extends in the longitudinal direction is attached to the floor (12) of the outside housing, on which the installation housing will stand up and/or by which it is centered.

8. An installation device (10) according to one of the preceding claims, **characterized in that** latching arms (31, 32) are provided at the sides on which the lugs (25, 26, 79, 80) are formed, on which latching surfaces (31a, 31b; 32a, 32b) are arranged which engage behind or beneath the free edges of the mutually facing bent legs and fix the installation housing.

9. An installation device (10) according to claim 8, **characterized in that** the latching arms (31 a, 31 b, 32a, 32b) of the installation housing are adjacent to one another and are unlatched under an acute angle to the outside.

10. An installation device according to one of the preceding claims, in which the installation housing is rectangular, **characterized in that** the lugs (25, 26, 79, 80) are formed on the free end edges of the side walls.

11. An installation device according to one of the preceding claims, **characterized in that** the lugs (25, 26, 79, 80) are formed on the installation housing (21) by interposing a film hinge (26a).

12. An installation device (10) according to one of the preceding claims,
**characterized in that** two lugs (25, 26, 79, 80) are provided on each side and the latching arms (31, 32) are arranged in between.

13. An installation device (10) according to one of the preceding claims,
**characterized in that** the holding grooves (19, 20; 77, 78) are formed by folding on the legs.

14. An installation device (10) according to one of the preceding claims,
**characterized in that** separating wall sections (37, 38, 39, 134, 135, 136) are provided on the floor of the installation housing, which sections form an interior space corresponding to an installation box with each other and optionally with a separating wall (33).

15. An installation device (10) according to claim 14, **characterized in that** recesses (40, 44) which are arranged at a distance from each other are provided on the face walls (23, 24), originating from their free edges, which recesses are covered by covering lugs (51, 52) whose ends are arranged in a concave manner and each form with the ends at the floor side an approximately circular breakthrough (109, 110, 58, 57) for inserting cables.

16. An installation device (10) according to claim 15, **characterized in that** the cover lugs (51, 52) are connected by means of a bridge (44, 45) and can be joined via the recesses (40, 41).

## Revendications

1. Dispositif d'installation électrique pouvant être introduit dans une ouverture dans un mur, comprenant un boîtier extérieur (11, 70, 90) à section en forme de C qui possède un fond (12) rectangulaire allongé, des barrettes (13, 14) disposées sur les bords longitudinaux du fond (12) perpendiculairement à celui-ci et des bras (15, 16) coudés perpendiculairement à celles-ci, qui sont orientés l'un vers l'autres et dont les bords d'extrémité sont distants les uns des autres, des rainures de réception en forme de U étant disposées sur les bords d'extrémités et courant le long des bords d'extrémité, et le boîtier extérieur présentant au moins un boîtier d'installation (21) avec au moins un bord d'accrochage, **caractérisé en ce que** l'au moins un bord d'accrochage est formé sur le boîtier d'installation sur des parois latérales (23, 24) opposées sous la forme d'une patte flexible (25, 26, 79, 80) qui peut être introduite dans les rainures de réception (19, 20, 77, 78) pour retenir le boîtier d'installation (21) dans le boîtier extérieur (11, 70, 90).

2. Dispositif d'installation (10) selon la revendication 1, **caractérisé en ce que** les côtés ouverts des rainures de réception en forme de U (19, 20) sont tournées l'un vers l'autre et les pattes (25, 26) s'écartent vers l'extérieur de façon approximativement parallèle à la surface de fond du boîtier d'installation (21).

3. Dispositif d'installation (10) selon la revendication 1, **caractérisé en ce que** les parois rainurées sont parallèles aux bras coudés (15, 16).

4. Dispositif d'installation (10) selon la revendication 1, **caractérisé en ce que** les parois rainurées forment ensemble un angle obtus qui est de préférence ouvert en direction du plan du fond.

5. Dispositif d'installation (10) selon la revendication 1, **caractérisé en ce que** les rainures de réception (77, 78 ; 93, 94) sont perpendiculaires ou approximativement perpendiculaires au fond du boîtier extérieur (70, 90), les faces ouvertes étant tournées à l'opposé du fond.

6. Dispositif d'installation (10) selon la revendication 5, **caractérisé en ce que caractérisé en ce que** les pattes (25, 26) sont disposées de telle manière qu'elles forment avec la surface extérieure des parois latérales du boîtier d'installation une rainure en forme de U ouverte vers le fond.

7. Dispositif d'installation (10) selon l'une des revendications précédentes, **caractérisé en ce qu'**il est prévu au fond (12) du boîtier extérieur un support (60) orienté dans le sens longitudinal et de préférence en forme de C, sur lequel le boîtier d'installation est posé et/ou par lequel il est centré.

8. Dispositif d'installation (10) selon l'une des revendications précédentes, **caractérisé en ce qu'**il est prévu sur les côtés où sont formées les pattes (25, 26 ; 79, 80) des bras d'encliquetage (31, 32) sur lesquels sont disposées des surfaces d'encliquetage (31a, 31b ; 32a, 32b) qui se mettent en prise derrière ou sous les bords libres des bras pliés orientés les uns vers les autres et qui fixent le boîtier d'installation.

9. Dispositif d'installation (10) selon la revendication 8, **caractérisé en ce que** les bras d'encliquetage (31a, 31b ; 32a, 32b) se raccordent au fond du boîtier d'installation et sont coudés vers l'extérieur selon un angle aigu.

10. Dispositif d'installation selon l'une des revendications précédentes, dans lequel les boîtiers d'installation sont rectangulaires, **caractérisé en ce que** les pattes (25, 26 ; 79, 80) sont formées sur les bords d'extrémité libres des parois latérales.

11. Dispositif d'installation selon l'une des revendications précédentes, **caractérisé en ce que** les pattes (25, 26 ; 79, 80) sont formées sur le boîtier d'installation (21) en intercalant une charnière à film (26a).

12. Dispositif d'installation (10) selon l'une des revendications précédentes, **caractérisé en ce** deux pattes (25, 26 ; 79, 80) sont prévues de chaque côté et les bras d'encliquetage (31, 32) sont disposés entre elles.

13. Dispositif d'installation (10) selon l'une des revendications précédentes, **caractérisé en ce que** les rainures de réception (19, 20 ; 77, 78) sont formées par pliage sur les bras.

14. Dispositif d'installation (10) selon l'une des revendications précédentes, **caractérisé en ce qu'**il est prévu sur le fond du boîtier d'installation des segments de cloison (37, 38, 39, 134, 135, 136) qui forment ensemble et éventuellement avec une cloison (33) un compartiment intérieur correspondant à une boîte d'installation.

15. Dispositif d'installation (10) selon la revendication 14, **caractérisé en ce qu'**il est prévu sur les faces d'extrémité (23, 24), à partir de leurs bords libres, des évidements (40, 41) écartés l'un de l'autre qui sont recouverts au moyen de pattes de couverture (51, 52) dont les extrémités sont de forme concave et qui forment chacune avec les extrémités du côté du fond une ouverture (109, 110, 58, 57) approximativement circulaire pour l'introduction de câbles.

16. Dispositif d'installation (10) selon la revendication 15, **caractérisé en ce que** les pattes de couverture (51, 52) sont reliées au moyen d'un pont (44, 45) et peuvent être assemblées par-dessus les évidements (40, 41).
